# FASCICULE DE BREVET EUROPEEN

(11) **EP 2 125 436 B1**
(45) Date de publication et mention de la délivrance du brevet: **19.10.2011**
(21) Numéro de dépôt: 08775677.1
(22) Date de dépôt: 05.03.2008
(51) Int. Cl.: B60R 13/07, B62D 25/07

(54) **DISPOSITIF D'EVACUATION D'UN TOIT DE VEHICULE AUTOMOBILE**
EVAKUIERUNGSVORRICHTUNG FÜR EIN AUTOMOBILDACH
EVACUATION DEVICE FOR AN AUTOMOBILE ROOF

(30) Priorité: 29.03.2007 FR 0754138
(43) Date de publication de la demande: 02.12.2009
(73) Titulaire: Renault S.A.S., 92100 Boulogne-Billancourt (FR)
(72) Inventeur: SANTANDREU, PASCAL, F-78125 Emance (FR); MORAL, ANGEL, E-47003 Vaussous (ES); BISROR, OLIVIER, F-78960 Voisins Le Bretonneux (FR); DECOUVELAERE, FREDDY, F-28410 Bu (FR)
(86) Numéro de dépôt international: PCT/FR2008/050374
(87) Numéro de publication internationale: WO 2008/129181

(56) Documents cités:
- EP-A- 0 553 822
- DE-C1- 3 723 175
- DE-U1- 29 716 657
- GB-A- 820 043
- US-A1- 2006 220 376

## Description

La présente invention concerne un dispositif d'évacuation d'eau d'un toit de véhicule automobile.

Classiquement, l'évacuation d'eau est réalisée par un tuyau rapporté sous une plaque, cette plaque étant soudée à un élément de structure du toit du véhicule. Une ouverture est réalisée dans la plaque pour correspondre à l'entrée du tuyau et l'eau s'évacue par le tuyau via cette ouverture.

Certains véhicules possèdent un pavillon soudé par laser sur les éléments latéraux de la carrosserie, et possèdent également dans ce contexte un grand toit ouvrant.

Du au soudage laser du pavillon avec le côté de caisse, et à l'absence de fait de gouges de pavillon dans lesquelles l'eau peut classiquement s'écouler, on peut être amené à monter un renfort 100 sur la partie latérale du pavillon, pour raccorder les tuyaux d'évacuations à la structure de caisse. Ce renfort est soudé, puis étanché par du mastic après un passage en cataphorèse. Sur ce renfort est soudée une pipette 110 qui est apte à communiquer avec le tuyau d'évacuation.

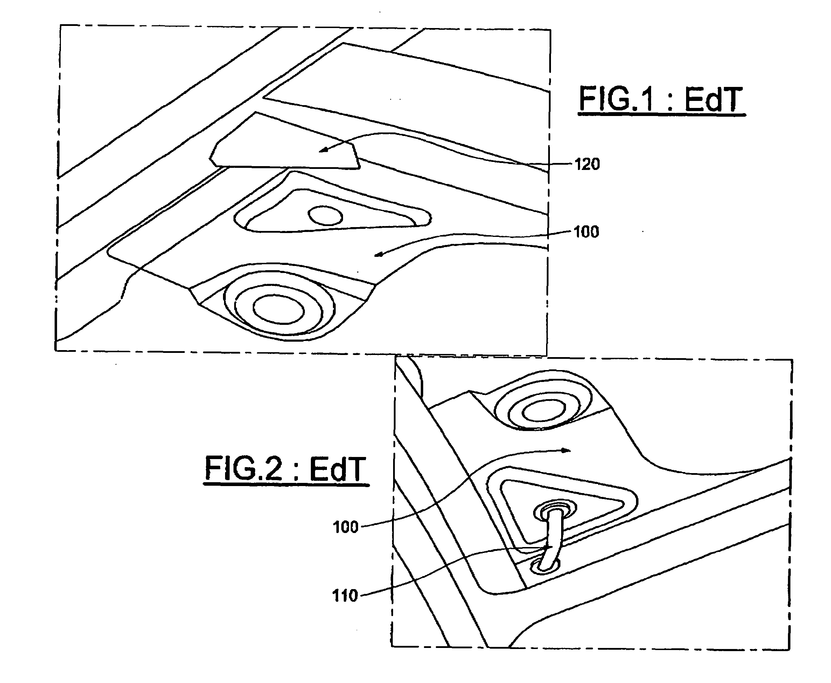

L'application à ce type de structure de toit d'un dispositif d'évacuation classique tel que décrit ci-dessus génère des volumes de rétention d'eau 120, tel que représenté sur la figure 1.

Il existe classiquement des solutions aux problèmes de rétention d'eau, et notamment la mise en place d'enjoliveurs latéraux dans des gouges longeant le côté de caisse. Pour des raisons de design, ce choix d'enjoliveurs latéraux n'est pas toujours fait par les constructeurs. En outre, une conception de toit impliquant un brasage laser du pavillon et du coté de caisse ne permet pas, comme dans le cas de soudures par points entre ces éléments, de concevoir une gouge de pavillon et un enjoliveur associé qui permettent d'évacuer l'eau soit par la gouge soit directement dans la cassette du toit ouvrant.

Un dispositif selon le préambule de la revendication 1 est décrit dans le document GB 820 043 A.

Un des objectifs de l'invention est donc de proposer une alternative à des dispositifs d'évacuation d'eau connus, une solution technique qui puisse être implantée dans chaque structure de toit, et notamment avec une structure de toit soudée au laser et intégrant un grand toit ouvrant.

En outre, en réponse à des objectifs que l'on retrouve invariablement chez les différents constructeurs automobiles, la présente invention se veut également peu coûteuse et peu encombrante.

Pour répondre à ces objectifs, l'invention propose un dispositif d'évacuation d'un toit de véhicule automobile, dans lequel un tuyau d'évacuation est raccordé à une ouverture réalisée dans une portion de structure de toit du véhicule, un moyen d'engagement étant apte à coopérer avec cet ouverture et à être relié au tuyau d'évacuation qui s'étend sous la structure, **caractérisé en ce que** le moyen d'engagement est formé par un élément rapporté sensiblement vertical.

Selon différentes caractéristiques de la présente invention :
- le moyen d'engagement est directement au contact de la structure du toit ;
- le moyen d'engagement est positionné dans un coin de la structure de pavillon ;
- le moyen d'engagement est formé par un écrou noyé.

L'invention vise à protéger également un véhicule automobile, du type comportant un pavillon soudé par laser, et un dispositif de toit ouvrant associé, **caractérisé en ce qu**'il comporte un dispositif d'évacuation tel qu'évoqué précédemment.

D'autres caractéristiques et avantages de l'invention apparaîtront à la lecture de la description détaillée qui suit pour la compréhension de laquelle on se reportera aux dessins annexés dans lesquels :
- la figure 1 est une représentation schématique d'un dispositif d'évacuation d'eau selon l'état de la technique ;
- la figure 2 est une vue du dispositif de la figure 1 vue de dessous ;
- la figure 3 est une représentation schématique d'un dispositif d'évacuation d'eau selon l'invention ;
- la figure 4 est une vue du dispositif de la figure 3 vue de dessous ;
- là figure 5 est une représentation d'un premier mode de réalisation du moyen d'engagement selon l'invention ;
- la figure 6 est une représentation d'un deuxième mode de réalisation du moyen d'engagement selon l'invention.

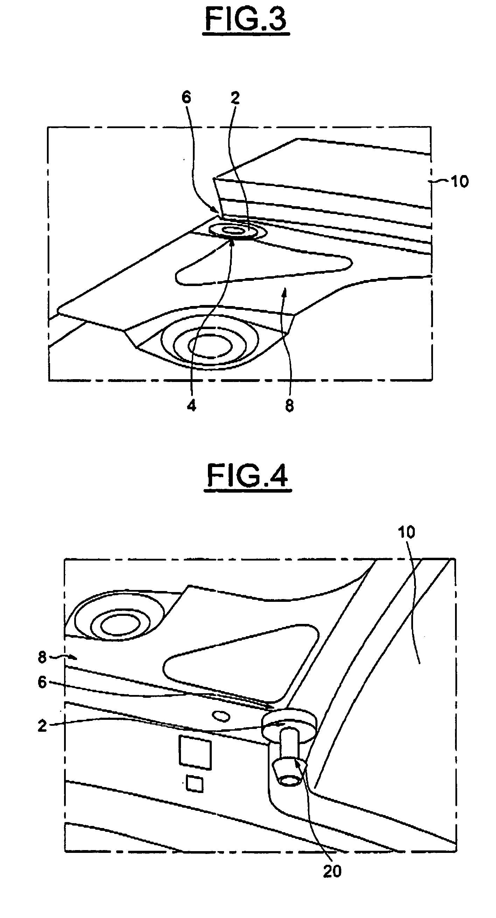

Selon l'invention, et tel que représenté sur les figures 3 à 6 à titre d'exemple, un dispositif d'évacuation d'eau 1 comprend un moyen d'engagement 2 sensiblement vertical engagé dans une ouverture 4 réalisée dans la structure du véhicule. Dans le cadre de l'exemple de réalisation décrit, le moyen d'engagement 2 est positionné au plus près d'un des coins 6 de la surface couverte par la structure de toit. Il n'a été décrit et représenté qu'un seul moyen d'engagement et qu'un seul dispositif d'évacuation d'eau associé dans l'un des coins de cette surface, mais il sera compris que chaque coin propre à être le lieu d'une rétention d'eau peut être muni du même dispositif.

En outre, le moyen d'engagement 2 est directement rapporté sur la structure du véhicule et est apte à s'engager dans l'ouverture 4 directement réalisée dans la structure du véhicule. Le moyen d'engagement est avantageusement mis en place sur la structure du véhicule par un procédé simple et qui ne nécessite pas de points de soudure, par sertissage par exemple. Tel qu'évoqué précédemment, une équerre de renfort 8 peut être associée à la traverse de pavillon 10 pour la tenue d'un grand toit ouvrant. Dans ce cas, l'ouverture 4 est réalisée sur cette équerre 8 et le moyen d'engagement 2 est directement rapporté sur l'équerre de renfort 8. Dans tous les cas, avec ou sans équerre de renfort, aucune plaque intermédiaire n'est soudée sur cette équerre de renfort ou sur la structure du véhicule pour permettre ensuite le soudage du moyen d'engagement 2.

Un tuyau d'évacuation, non représenté, est ensuite accouplé au moyen d'engagement 2.

Selon un mode particulièrement avantageux de l'invention, un écrou noyé 20 est utilisé pour former le moyen d'engagement 2 apte à permettre l'évacuation d'eau. De façon classique, les écrous noyés sont des composants d'assemblage reconnus pour leur pose en aveugle et présentent également l'avantage d'être posés sur des surfaces peintes ou pré-revêtues sans détériorer le support. Ce type d'écrou noyé a deux fonctions reconnues, toutes les deux dans le montage et l'assemblage de pièces, et qui sont d'une part une fonction rivet qui permet l'assemblage de deux pièces, et d'autre part une fonction écrou qui permet d'ajouter un taraudage sur une pièce mince.

La présente invention vise à utiliser ce type d'écrou dans une fonction non conventionnelle mais apte à assurer la caractéristique voulue d'un moyen d'engagement 2 sensiblement vertical, facile à mettre en place et non impactant pour la structure spécifique de pavillon et de toit ouvrant décrite ci-dessus. Le taraudage propre à l'écrou noyé 20 peut permettre une fixation aisée du tuyau d'évacuation 12.

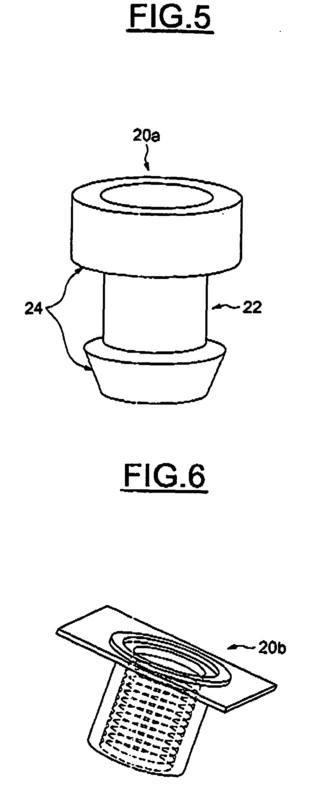

A titre d'exemple de réalisation non limitatif, deux modes de réalisation de l'écrou noyé 20 utilisé ont été représentés aux figures 5 et 6. Il sera ainsi compris à la lecture de ces figures que selon l'invention on peut retrouver indifféremment un écrou 20a strictement cylindrique d'une part, ou un écrou 20b présentant des gorges 22 et des épaulements 24 d'autre part, et ce sans sortir du contexte de l'invention qui veut que le moyen d'engagement 2 soit essentiellement vertical. Ainsi, dans les deux cas, la présente invention vise à intégrer un élément vertical apte à coopérer avec l'ouverture d'évacuation d'eau.

## Revendications

1. Dispositif d'évacuation d'eau d'un toit de véhicule automobile, dans lequel un tuyau d'évacuation est raccordé à une ouverture (4) réalisée dans une portion de structure de toit du véhicule, un moyen d'engagement (2) étant apte à coopérer avec cette ouverture (4) et à être relié au tuyau d'évacuation, le moyen d'engagement (2) étant formé par un élément rapporté essentiellement vertical directement au contact de la structure du toit, **caractérisé en ce que** le moyen d'engagement (2) est formé par un écrou noyé (20) comprenant un taraudage apte à coopérer avec le tuyau d'évacuation.

2. Dispositif d'évacuation selon la revendication 1 ou 2, **caractérisé en ce que** le moyen d'engagement (2) est positionné dans un coin (6) de la surface par la structure du toit.

3. Véhicule automobile, de type comportant un pavillon soudé par laser, et un dispositif de toit ouvrant associé, **caractérisé en ce qu**'il comporte au moins un dispositif d'évacuation selon l'une des revendications précédentes.

## Claims

1. Device for draining water from a motor vehicle roof, in which a draining pipe is connected to an opening (4) made in a roof-structure portion of the vehicle, an engagement means (2) being capable of interacting with this opening (4) and of being connected to the draining pipe, the engagement means (2) being formed by an essentially vertical element fitted directly in contact with the structure of the roof, **characterized in that** the engagement means (2) is formed by a countersunk nut (20) comprising a thread capable of interacting with the draining pipe.

2. Draining device according to Claim 1 or 2, **characterized in that** the engagement means (2) is positioned in a corner (6) of the surface through the structure of the roof.

3. Motor vehicle, of the type comprising a laser-welded top, and an associated sunroof device, **characterized in that** it comprises at least one draining device according to one of the preceding claims.

## Patentansprüche

1. Vorrichtung zum Abführen von Wasser von einem Kraftfahrzeugdach, wobei ein Abführungsrohr mit einer Öffnung (4) verbunden ist, die in einem Strukturabschnitt des Fahrzeugdachs verwirklicht ist, wobei ein Eingriffmittel (2) mit dieser Öffnung (4) zusammenwirken kann und mit dem Abführungsrohr verbunden sein kann, wobei das Eingriffmittel (2) durch ein Element gebildet ist, das im Wesentlichen vertikal direkt in Kontakt mit der Dachstruktur angefügt ist, **dadurch gekennzeichnet, dass** das Eingriffmittel (2) durch eine versenkte Mutter (20) gebildet ist, die ein Gewinde aufweist, die mit dem Abführungsrohr zusammenwirken kann.

2. Abführungsvorrichtung nach Anspruch 1 oder 2, **dadurch gekennzeichnet, dass** das Eingriffmittel (2) in **einer Ecke** (6) der Oberfläche der Dachstruktur positioniert ist.

3. Kraftfahrzeug des Typs, der ein laserverschweißtes Fahrzeugdach und eine zugeordnete Schiebedachvorrichtung umfasst, **dadurch gekennzeichnet, dass** es wenigstens eine Abführungsvorrichtung nach einem der vorhergehenden Ansprüche umfasst.
